(19) Europäisches Patentamt
European Patent Office
Office européen des brevets

(11) EP 1 464 668 A1

(12) **EUROPEAN PATENT APPLICATION**

(43) Date of publication:
**06.10.2004 Bulletin 2004/41**

(51) Int Cl.[7]: **C08J 9/00**

(21) Application number: **04007276.1**

(22) Date of filing: **26.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **01.04.2003 IT MI20030641**

(71) Applicant: **Solvay Solexis S.p.A.**
**20121 Milano (IT)**

(72) Inventors:
- **Abusleme, Julio A.**
  **21047 Saronno Varese (IT)**
- **Manzoni, Claudia**
  **40100 Bologna (IT)**
- **Besana, Giambattista**
  **22066 Mariano Comense Como (IT)**

(74) Representative: **Sama, Daniele, Dr.**
**Sama Patents,**
**Via G.B. Morgagni, 2**
**20129 Milano (IT)**

(54) **Foamable compositions of fluoropolymers based on chlorotrifluoroethylene**

(57) Foamable compositions comprising a chlorotrifluoroethylene (CTFE) based polymer containing at least 80% by moles of CTFE and a nucleating agent.

EP 1 464 668 A1

## Description

The present invention relates to foamable fluoropolymer compositions capable to give manufactured articles or foamed molded articles having improved electrical insulation properties.

More specifically the present invention relates to foamable compositions of a chlorotrifluoroethylene (CTFE) based polymer containing at least 80% by moles of CTFE.

It is known that fluoropolymers, considering their very good chemical resistance, flame-resistance properties, and their good electrical insulation properties, can be used in a wide range of applications, in particular in the electric wire coating for their low dielectric constant and the low tanδ at high frequencies. In particular fluoropolymers are used as foamed insulations of wires with the advantage of a further decrease of the dielectric constant and tanδ, and lowering the amount of fluoropolymer used.

The prior art relating to the electric wire coating with foamed fluoropolymers comprises the use of a fluoropolymer mixture containing a nucleating agent as boron nitride or polytetrafluoroethylene (PTFE) particles, which is foamed during the extrusion. The expansion can be obtained with the use of a foaming agent previously contained in the mixture or by using an inert gas, such for example $N_2$ or $CO_2$, directly introduced in the extruder. See for example USP 5,837,173

The use of certain foaming agents which by decomposition give volatile products, shows the drawback that residues of the agent remain in the foamed fluoropolymer and can modify its electrical insulation properties.

The use of inert gases shows the drawback that it is not easy to adjuste the gas inlet during the extrusion at a flow rate suitable to obtain the desired foaming. Anyhow it results necessary to use an expensive and complex equipment, operating under high pressure, to guarantee an uniformity of the foamed electric wire.

The need was therefore felt to have available a fluoropolymer based composition that it were easy to be prepared and easy to be transformed into foamed coatings or articles having improved electrical insulation properties.

Compositions based on CTFE polymers which solve the above technical problem have been surprisingly and unexpectedly found.

An object of the present invention are foamable compositions mainly formed of:

A) 50-99.9% by weight of a chlorotrifluoroethylene (CTFE) polymer containing at least 80% by moles of CTFE; and
B) 0.1-50% by weight of a nucleating agent.

More specifically the nucleating agent is under the form of fine powder, having an average particle size lower than 50 micron, preferably lower than 20 micron, and a melting temperature higher than 250°C.

Nucleating agents are preferably used in amounts from 5 to 30% by weight, more preferably from 10 to 20%.

The preferred nucleating agent is the tetrafluoroethylene (TFE) homopolymer or its copolymers having a second melting temperature higher than 250°C. Examples of TFE copolymers are TFE copolymers with perfluoroalkylvinylethers wherein the alkyl is a $C_1$-$C_3$ (for example the commercial products Hyflon® MFA and PFA) , TFE copolymers with perfluorodioxoles of formula (I) reported hereinafter, or TFE copolymers with hexafluoropropene (FEP), optionally containing perfluoroalkylvinylethers.

More preferably as nucleating agent B) the tetrafluoroethylene homopolymer (PTFE) is used having a number average molecular weight lower than 1,000,000, preferably lower than 500,000. Said PTFE can be obtained by irradiating with gamma rays or electron beam PTFE powders obtained by dispersion or suspension polymerization processes and then by milling said irradiated powders.

With the dispersion polymerization processes latexes having a particle size of 0.1-0.3 micron are obtained. After coagulation the powder particle sizes increase to about 100-500 micron. Said powders are irradiated with gamma rays and then milled to obtain powders having final particle sizes lower than 15 micron (commercial product PTFE Algoflon® L 206 and Algoflon® L 203).

With the suspension polymerization processes powders having particle sizes of 2-5 mm are obtained. Said powders are irradiated with electron beam and then milled to obtain powders having a final particle size lower than 15 micron.

The number average molecular weight of the irradiated PTFE has values lower than 1,000,000, generally lower than 500,000 and is calculated by the total amount of the PTFE end groups $-CF_2COOH$ and $-CF_2COF$, Ng (expressed in moles/kg), determined by FT-IR spectroscopy. The number average molecular weight ($M_n$) is calculated by means of the following formula $M_n = 2000/N_g$.

Other nucleating agents which can be used according to the invention are for example boron nitride, silicon nitride, silica, alumina, talc, zinc sulphide.

The polymer A) is preferably formed of at least 90% by moles of CTFE, more preferably of at least 95% by moles, and comprises CTFE homopolymers and copolymers preparable according to patent application EP 1, 067, 146 herein incorporated by reference.

As CTFE copolymers, those wherein the comonomer is selected from perfluoroalkylvinylethers, wherein the

alkyl is a $C_1$-$C_3$, are preferred, preferably perfluoropropylvinylether. One or more of said perfluoroalkylvinylethers can be used. For the preparation of these copolymers see for example USP 6,391,975.

Other CTFE comonomers are dioxoles having formula:

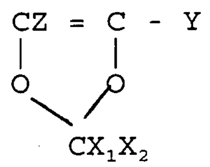

(I)

wherein Y is equal to $OR_f$ wherein $R_f$ is a perfluoroalkyl having from 1 to 5 carbon atoms, or Y = Z as defined below; preferably Y is equal to $OR_f$; $X_1$ and $X_2$, equal to or different from each other, are -F or $-CF_3$; Z is selected from -F, -H, -Cl; preferably in formula (I) $X_1$, $X_2$ and Z are -F; $R_f$ is preferably $-CF_3$, $-C_2F_5$, or $-C_3F_7$. The formula (I) fluorodioxoles wherein Y is equal to $OR_f$ wherein $R_f$ is $-CF_3$ and $X_1$, $X_2$ and Z are -F, are particularly preferred. One or more of said dioxoles can be used. For the preparation of said copolymers the disclosure of USP 6,277,936 can be followed.

Other CTFE comonomers are acrylic monomers having general formula:

$$CH_2{=}CH\text{-}CO\text{-}O\text{-}R_1 \qquad \text{(II)}$$

wherein $R_1$ is a hydrogenated radical from 1 to 20 C atoms, $C_1$-$C_{20}$, alkyl, linear and/or branched, or cycloalkyl radical, or $R_1$ is H. Optionally the radical $R_1$ can contain: heteroatoms preferably Cl, O, N; one or more functional groups preferably selected from -OH, -COOH, epoxide, ester and ether; and double bonds. Preferably $R_1$ is an alkyl radical from 1 to 10 C atoms containing one or more functional hydroxide groups. For example ethylacrylate, n-butylacrylate, acrylic acid, hydroxyethylacrylate, hydroxypropylacrylate, (hydroxy)-ethylhexylacrylate, etc., can be mentioned. One or more of said acrylic monomers can be used. For the preparation of these copolymers see for example USP 6,342,569.

The above patents are herein incorporated by reference.

As CTFE comonomers also vinylidene fluoride (VDF) and/or tetrafluoroethylene (TFE) can be mentioned.

The A)+B) compositions can also contain known additives of the prior art for foamable compositions as thermal stabilizers, UV stabilizers, pigments, flame retardants, reinforcing agents.

An essential characteristic of the invention compositions is that the compositions are foamable without using known foaming agents of the prior art such, for example, nitrogen, $CO_2$, or light fractions of perfluoropolyethers as described in USP 5,716,665.

By thermoforming or extrusion of the A)+B) composition foamed molded articles and in particular foamed insulations of electric wires and cables are obtained.

A further object of the present invention is the process to prepare foamed molded articles by extrusion or thermo-molding of the invention A)+B) compositions.

Another object of the present invention are electric wires formed by a metal conductor and by a foamed insulating coating formed by the A)+B) composition extruded on the conductor.

By thermoforming or extrusion of the present invention composition foamed molded articles and in particular foamed insulations of electric wires and cables are obtained having a void degree higher than 10% by volume, preferably higher than 20% by volume, wherein the average cell sizes are lower than 100 micron, preferably lower than 60 micron.

The foamed invention compositions are characterized in having a low tanδ. The tanδ is defined as the ratio between the real part and the imaginary part of the dielectric constant at a defined frequency.

The use of the invention composition as foamed insulations of electric wires and cables allows to obtain wires and cables having a low attenuation.

The invention compositions can furthermore be used to prepare foamed articles such for example thermal and sound insulating panels for the commercial and residential building, anticrash coatings, and for the thermal insulation for example of household electrical appliances or in the car industry, or for the insulation of Chemical Process Industry (CPI) equipment.

Some Examples follow for illustrative but not limitative purposes of the scope of the invention.

## EXAMPLES

The following characterizations carried out on the materials of the Examples are indicated hereinafter:

- Melt Flow Index (M.I.)
  The M.I. of the fluorinated polymers is measured according to the ASTM D 1238 method.
- Second melting temperature ($T_{mII}$)
  The $T_{mII}$ of fluorinated polymers is determined by differential scanning calorimetry (DSC) at 10°C/min.
- Cell size
  The cell sizes have been determined by an electronic scanning microscope (SEM) model Stereoscan 200 by Cambridge Instruments.
- Void %
  It has been calculated by means of the following equation:

$$\text{Void \%} = 100^*(Qc-Qm)/Qc$$

wherein:

Qc= calculated density of the composition A) +B) obtained by the weight average of the measured densities of A) and B) ;
Qm= density of the foamed article measured according to the ASTM D 792 method.

EXAMPLE 1

Component A)

Component A) is a CTFE homopolymer powder having a M.I. equal to 45 g/10' measured at 265°C and 10 kg of load, prepared according to patent EP-A-1,067,146.

Component B)

Component B) is a TFE homopolymer obtained by suspension polymerization and subjected to irradiation with electron beam and subsequent milling, having a number molecular weight of 100,000 and an average particle size equal to 10 micron, commercially available as POLYMIST F5A by Solvay Solexis, formerly Ausimont S.p.A., of the Solvay group.

Preparation of A)+B)

A blend of powders formed by 90% by weight of A) and 10% by weight of B) has been prepared. The dry blend was granulated in a conic twin-screw Brabender extruder (screw diameter ranging from 42.5 mm in hopper to 28.5 mm at the head) made of corrosion-resistant steels as Hastelloy and Inconel.

The three extruder heating zones were set, starting from the hopper, at 175, 215 and 240°C. The head temperature was set at 250°C. The extruder worked at 10 rpm with a resulting flow-rate of about 5 kg/h, with a head pressure of about 27 bar and a melt temperature of 250°C.

Wire extrusion

The blend granules have been used to coat by extrusion an AWG 24 single-wire copper having a diameter of 0.51 mm.

For the coating of this, a Davis line was used with a single screw Sterling extruder having a diameter of 38 mm with a ratio length/diameter of 30 and made of corrosion-resistant steels suitable for the fluorinated polymer processing, as Hastelloy C276.

Furthermore a pipe die with a Draw Down Ratio (DDR) of about 100 has been used to cover the conductor with a thickness of 0.15 mm of the foamed blend A)+B).

The test working conditions are summarized hereinafter. The set thermal profile is rising from the hopper to the head ranging from 220°C to 300°C, resulting a melt temperature of 289°C under the working conditions. The material was extruded at 20 rpm with a line rate of almost 50 m/min. The pressure at the extruder head is under said

conditions of about 100 bar. Under said conditions it is noticed polymer foaming flowing out from the head wherein it is cooled by passing it in a bath with water at room temperature.

The void % of the coating of the wire results to be 35%.

The size of the obtained cells ranges from 10 to 50 micron.

EXAMPLE 2 (comparative)

The Example 1 was repeated but by using only component A), i.e. the CTFE homopolymer, without the presence of B), obtaining an electric wire with a coating having a void % equal to 0.

EXAMPLE 3

Component A)

Component A) is the same PCTFE of the Example 1.

Component B)

Component B) is the same PTFE of the Example 1.

Preparation of A)+B)

A blend of powders formed by 75% by weight of A) and 25% by weight of B) has been prepared. The blend was granulated in a single-screw extruder having a diameter of 18 mm by Brabender, at a rate of 40 rpm setting the three heating zones starting from the hopper, at 200, 210 and 220°C and the temperature at the head at 230°C.

The obtained granules were extruded in the equipment for the M.I. measurement at a temperature of 265°C obtaining an extrudate.

The void % of the extrudate is 27.6% with a cell size between 30 and 90 micron.

EXAMPLE 4

Component A)

Component A) is a CTFE copolymer powder with 1.6% by moles of perfluoropropylvinylether having a M.I. equal to 9.8 g/10' measured at 265°C and 10 kg of load and having a second melting temperature ($T_{mII}$) of 197.1°C prepared according to the Example 4 of USP 6,391,975.

Component B)

Component B) is the same PTFE of the Example 1.

Preparation of A)+B)

A powder blend containing 90% by weight of A) and 10% by weight of B) has been prepared. The blend was granulated and then extruded in an extrudate as in the Example 3 using the equipment for the M.I. measurement.

The void % of the extrudate is 31.9% with a cell size between 30 and 130 micron.

EXAMPLE 5

Component A)

Component A) is the same PCTFE of the Example 1.

Component B)

Component B) is a TFE copolymer with perfluoroalkylvinylether, commercially available as Hyflon® MFA 6010 by Solvay Solexis, formerly Ausimont S.p.A., of Solvay group, having an average particle size equal to 30 micron and having a ($T_{mII}$) equal to 285°C and a M.I. measured at 372°C and 5 kg of load equal to 16.3 g/10'.

Preparation of A)+B)

A powder blend containing 90% by weight of A) and 10% by weight of B) has been prepared. The blend was granulated as in the Example 3 and then extruded in an extrudate as in the Example 3 using the equipment for the M. I. measurement.

The void % of the extrudate string is 25.8% with a cell size between 150 and 230 micron.

## Claims

**1.** Foamable compositions mainly formed by:

A) 50-99.9% by weight of a chlorotrifluoroethylene (CTFE) polymer containing at least 80% by moles of CTFE; and
B) 0.1-50% by weight of a nucleating agent.

**2.** Foamable compositions according to claim 1 mainly formed by:

A) 50-99.9% by weight of a chlorotrifluoroethylene (CTFE) polymer containing at least 80% by moles of CTFE; and
B) 0.1-50% by weight of a nucleating agent, under fine powder, having average particle size lower than 50 micron, preferably lower than 20 micron and a melting temperature higher than 250°C.

**3.** Compositions according to claims 1-2, wherein the nucleating agent is selected between the tetrafluoroethylene (TFE) homopolymer or its copolymers having a second melting temperature higher than 250°C.

**4.** Compositions according to claims 1-3, wherein the nucleating agent B) is the tetrafluoroethylene homopolymer (PTFE) having a number average molecular weight lower than 1,000,000, preferably lower than 500,000.

**5.** Compositions according to claims 1-4, wherein the TFE copolymers are selected from TFE copolymers with perfluoroalkylvinylethers wherein the alkyl is a $C_1$-$C_3$, TFE copolymers with perfluorodioxoles or TFE copolymers with hexafluoropropene (FEP), optionally containing perfluoroalkylvinylethers.

**6.** Compositions according to claims 1-5, wherein the nucleating agent is used in an amount from 5 to 30% by weight, more preferably from 10 to 20%.

**7.** Compositions according to claims 1-6, wherein the nucleating agent B) is the tetrafluoroethylene homopolymer (PTFE), irradiated with gamma rays or with electron beam.

**8.** Compositions according to claims 1-7, wherein the polymer A) is formed by at least 90% by moles of CTFE, preferably by at least 95% by moles.

**9.** Compositions according to claims 1-8, wherein the polymer A) is a CTFE copolymer with one or more comonomers selected from:

- perfluoroalkylvinylethers, wherein the alkyl is $C_1$-$C_3$, preferably perfluoropropylvinylether;
- dioxoles having formula:

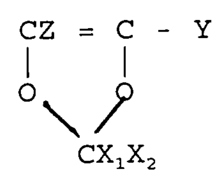

(I)

wherein Y is equal to $OR_f$ wherein $R_f$ is a perfluoroalkyl having from 1 to 5 carbon atoms, or Y = Z as defined below; preferably Y is equal to $OR_f$; $X_1$ and $X_2$, equal to or different from each other, are -F or $-CF_3$; Z is

selected from -F, -H, -Cl; preferably in formula (I) $X_1$, $X_2$ and Z are -F; $R_f$ is preferably $-CF_3$, $-C_2F_5$, or $-C_3F_7$;

- acrylic monomers having general formula:

$$CH_2=CH-CO-O-R_1 \qquad (II)$$

wherein $R_1$ is a hydrogenated radical from 1 to 20 C atoms, $C_1$-$C_{20}$, alkyl, linear and/or branched, or cycloalkyl radical, or $R_1$ is H. The radical $R_1$ can optionally contain: heteroatoms preferably Cl, O, N; one or more functional groups preferably selected from -OH, -COOH, epoxide, ester and ether; and double bonds;

- vinylidene fluoride (VDF) and/or tetrafluoroethylene (TFE).

**10.** A process to prepare molded articles and foamed coatings comprising the extrusion or thermoforming of the compositions of claims 1-9.

**11.** Molded articles and foamed coatings obtainable according to claim 10.

**12.** Articles and foamed coatings according to claim 11 having a void % higher than 10% by volume, preferably higher than 20% by volume, wherein the average cell sizes are lower than 100 micron, preferably lower than 60 micron.

**13.** Electric wires formed of a metal conductor and of a foamed coating according to claim 12.

European Patent Office

# EUROPEAN SEARCH REPORT

Application Number
EP 04 00 7276

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 610 203 A (BUCKMASTER MARLIN D ET AL) 11 March 1997 (1997-03-11)<br>* column 1, line 5 - line 13 *<br>* column 4, line 37 - line 38 *<br>* column 5, line 19 - line 23 *<br>* claim 1 * | 1-13 | C08J9/00 |
| X | US 2002/156139 A1 (HRIVNAK JEFFREY A) 24 October 2002 (2002-10-24)<br>* page 4, paragraph 37 *<br>* page 5, paragraph 43 * | 1-13 | |
| Y | US 4 331 619 A (CHUNG DANIEL C ET AL) 25 May 1982 (1982-05-25)<br>* column 1, line 55 - line 68 * | 1-13 | |
| Y | EP 1 067 146 A (AUSIMONT SPA) 10 January 2001 (2001-01-10)<br>* claim 1 * | 1-13 | |
| Y | US 4 368 350 A (PERELMAN ROBERT D) 11 January 1983 (1983-01-11)<br>* column 1, line 8 - line 17 * | 2-7 | TECHNICAL FIELDS SEARCHED (Int.Cl.7)<br>C08J |

The present search report has been drawn up for all claims

| Place of search | Date of completion of the search | Examiner |
|---|---|---|
| Munich | 14 June 2004 | Müller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 04 00 7276

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2004

| Patent document cited in search report | Publication date | Patent family member(s) | Publication date |
|---|---|---|---|
| US 5610203 A | 11-03-1997 | EP 0801098 A1 | 15-10-1997 |
| | | JP 10045931 A | 17-02-1998 |
| US 2002156139 A1 | 24-10-2002 | US 2002061934 A1 | 23-05-2002 |
| | | US 2002151610 A1 | 17-10-2002 |
| US 4331619 A | 25-05-1982 | AU 544893 B2 | 20-06-1985 |
| | | AU 7832981 A | 17-06-1982 |
| | | CA 1175200 A1 | 25-09-1984 |
| | | DE 3162692 D1 | 19-04-1984 |
| | | EP 0054183 A1 | 23-06-1982 |
| | | JP 1667247 C | 29-05-1992 |
| | | JP 3028237 A | 06-02-1991 |
| | | JP 3029814 B | 25-04-1991 |
| | | JP 1613574 C | 15-08-1991 |
| | | JP 2037939 B | 28-08-1990 |
| | | JP 57123233 A | 31-07-1982 |
| | | US 4394460 A | 19-07-1983 |
| EP 1067146 A | 10-01-2001 | IT MI991516 A1 | 09-01-2001 |
| | | EP 1067146 A1 | 10-01-2001 |
| | | JP 2001040015 A | 13-02-2001 |
| | | US 6706803 B1 | 16-03-2004 |
| US 4368350 A | 11-01-1983 | US 4304713 A | 08-12-1981 |
| | | CA 1154216 A1 | 27-09-1983 |
| | | GB 2070617 A ,B | 09-09-1981 |

EPO FORM P0459

For more details about this annex : see Official Journal of the European Patent Office, No. 12/82